# EUROPEAN PATENT APPLICATION

(11) **EP 4 644 399 A1**
(43) Date of publication of application: **05.11.2025**
(21) Application number: 25171930.8
(22) Date of filing: 23.04.2025
(51) Int. Cl.: C07F 7/18

(54) **METHOD FOR PRODUCING NITROGEN-CONTAINING POLYFUNCTIONAL ORGANOXYSILANE COMPOUND**

(30) Priority: 30.04.2024 JP 2024073681
(71) Applicant: SHIN-ETSU CHEMICAL CO., LTD., Tokyo 100-0005 (JP)
(72) Inventor: ICHII, Shun, Joetsu-shi, 9428601 (JP); TONOMURA, Yoichi, Joetsu-shi, 9428601 (JP); KIYOMORI, Ayumu, Joetsu-shi, 9428601 (JP)
(74) Representative: Mewburn Ellis LLP

(57) **Abstract**

In the production of a compound having formula (3) or (3'): 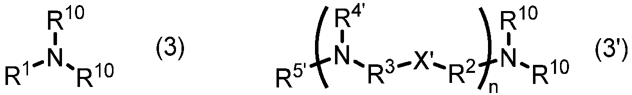 wherein R¹⁰ is a group having formula (4): 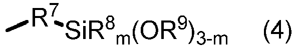 wherein R^{4'} and R^{5'} each are a hydrocarbon group or the like, and X' is a single bond or the like, by reacting an amine having formula (1) or (1'): 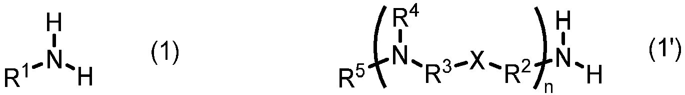 wherein R¹, R², and R³ each are a hydrocarbon group, R⁴ and R⁵ each are H or the like, X is a single bond or the like, and n is 1-3, with a haloalkoxysilane having formula (2): 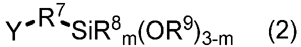 wherein R⁷, R⁸, and R⁹ each are a hydrocarbon group, Y is Cl or the like, and m is 0-2, a secondary amine having formula (5): 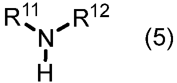 wherein R¹¹ is a branched or cyclic saturated hydrocarbon group in which C bonded to N is branched, and R¹² is a hydrocarbon group or the like (exclusive of a group of R¹¹), is used.

## Description

### TECHNICAL FIELD

The present invention relates to a method for producing a nitrogen-containing polyfunctional organoxysilane compound useful as a silane coupling agent, a surface treatment agent, a resin additive, a paint additive, an adhesive agent, or the like.

### BACKGROUND

The nitrogen-containing organoxysilane compound is useful, for example, as a silane coupling agent, a surface treatment agent, a resin additive, a paint additive, or an adhesive agent. As such a nitrogen-containing organoxysilane compound, an organoxysilane compound having a primary amino group such as aminopropyltrimethoxysilane, an organoxysilane compound having a secondary amino group such as N-phenylaminopropyltrimethoxysilane, an organoxysilane compound having a tertiary amino group such as dimethylaminopropyltrimethoxysilane, and the like are known.

When used in the above applications, these silane compounds having an amino group may exert only a small effect by their addition because they have at most three organoxy groups such as alkoxy groups acting as reaction points and only one silicon atom to which the organoxy groups such as alkoxy groups are bonded.

Furthermore, examples of the compounds which have many reaction points and thus are considered to exert a large effect by their addition include tris(trimethoxysilylpropyl)amine having nine organoxy groups such as alkoxy groups and three silicon atoms, and in Patent Document 1, the compound is used as an effective adhesive agent for a metal surface.

As a method for producing such a nitrogen-containing organoxysilane compound having a large number of organoxy groups, a method in which a substitution reaction of 2 equivalents of a haloalkylalkoxysilane compound with 1 mol of a primary amine compound is performed is known.

For example, in Patent Document 2, by reacting N,N-dialkylethylenediamine with 3-chloropropyltrimethoxysilane, an ethylenediamine derivative containing two corresponding trimethoxysilyl groups is produced.

In Patent Document 3, by reacting 3-aminophenylbenzoate with 3-chloropropyltriethoxysilane using potassium carbonate as a base, an aniline derivative in which two corresponding triethoxysilyl groups are introduced is produced.

In Patent Document 4, by reacting 3-aminopropyltrimethoxysilane and 3-chloropropyltriethoxysilane using triethylamine as a base, a tertiary amine compound having three trialkoxysilyl groups is produced.

### Citation List

Patent Document 1: JP-A H07-228702
Patent Document 2: JP-A 2011-121906
Patent Document 3: WO 2011/045389
Patent Document 4: DE 102015225879

### SUMMARY OF THE INVENTION

However, in a substitution reaction between a primary amine compound and multiple equivalents of a haloalkylalkoxysilane compound, the secondary amine compound as an intermediate captures a hydrogen halide as a by-product and forms a hydrohalide having poor reactivity, whereby the reaction rate is significantly reduced before reaching the target tertiary amine compound. In fact, in Patent Document 2, since a base for neutralizing the hydrogen halide is not used, the yield of the target tertiary amine compound is remarkably low. Thus, in order to efficiently obtain the target tertiary amine compound in high yield, it is necessary to add a basic compound equivalent to or stronger than the secondary amine compound as an intermediate for neutralizing the hydrogen halide.

In this regard, in Patent Document 3, potassium carbonate is used as a base. However, in the case of an inorganic base, water generated by neutralization hydrolyzes an organoxysilyl group, and thus an inorganic base is essentially not suitable for production of an organoxysilane compound.

In Patent Document 4, triethylamine, which is a tertiary amine compound, is used as a base, and a large excess amount of triethylamine is allowed to act under pressure of 3 to 4 atm at a high temperature of 175°C. A method that requires a large excess amount of base under pressure and high temperature as described above generates a large energy cost and waste, and thus there is a problem in terms of productivity.

The present invention has been made in view of the above circumstances, and an object of the present invention is to provide a method for producing a nitrogen-containing polyfunctional organoxysilane compound that can be carried out under mild reaction conditions such as normal pressure and 130°C or lower without generating water due to neutralization or without using a large excess amount of base in a substitution reaction between a primary amine compound and a haloalkylalkoxysilane compound.

As a result of intensive studies to solve the above problems, the present inventors have found that, by using a secondary amine having at least one bulky substituent such as a secondary or tertiary alkyl group as a base in an equimolar amount to a hydrogen halide to be generated in a substitution reaction between a primary amine compound and a haloalkylalkoxysilane compound, a corresponding nitrogen-containing polyfunctional organoxysilane compound can be produced in high yield and high purity under mild reaction conditions such as normal pressure (0.09 to 0.11 MPa) and 130°C or lower, and have completed the present invention.

That is, the present invention provides
1. a method for producing a nitrogen-containing polyfunctional organoxysilane compound, the method including the step of performing a substitution reaction between an amine compound having the following general formula (1) or (1'): 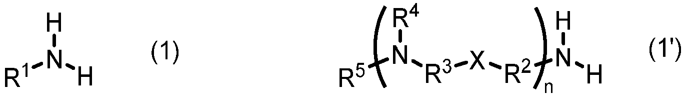
   wherein R¹ represents a monovalent hydrocarbon group having 1 to 18 carbon atoms which is unsubstituted or substituted with a group other than an amino group, R² and R³ each represent a substituted or unsubstituted divalent hydrocarbon group having 1 to 3 carbon atoms, R⁴ and R⁵ each represent a hydrogen atom or a substituted or unsubstituted monovalent hydrocarbon group having 1 to 18 carbon atoms, X represents a single bond or NR⁶, R⁶ represents a hydrogen atom or a substituted or unsubstituted monovalent hydrocarbon group having 1 to 18 carbon atoms, R⁵ and R⁶ may be bonded to each other to form a ring together with nitrogen atoms to which they are bonded, and n represents an integer of 1 to 3, and a haloalkylalkoxysilane compound having the following general formula (2): 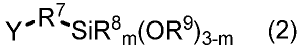
   wherein R⁷ represents an unsubstituted divalent hydrocarbon group having 1 to 10 carbon atoms which may be separated by a heteroatom, R⁸ and R⁹ each independently represent a substituted or unsubstituted monovalent hydrocarbon group having 1 to 10 carbon atoms, Y represents a chlorine atom, a bromine atom, or an iodine atom, and m represents an integer of 0 to 2, to produce a nitrogen-containing polyfunctional organoxysilane compound having the following general formula (3) or (3'): 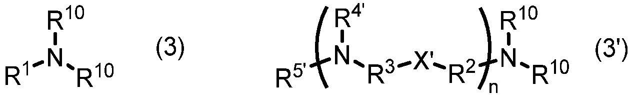
   wherein R¹ to R³ and n are as defined above, and R¹⁰ represents an alkoxysilylalkyl group having the following general formula (4): 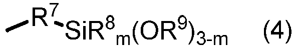
   wherein, R⁷ to R⁹ and m are as defined above, R^{4'} and R^{5'} each represent R¹⁰ or a substituted or unsubstituted monovalent hydrocarbon group having 1 to 18 carbon atoms, X' represents a single bond or NR^{6'}, and R^{6'} represents R¹⁰ or a substituted or unsubstituted monovalent hydrocarbon group having 1 to 18 carbon atoms,
      a secondary amine compound having the following general formula (5): 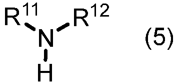
   wherein R¹¹ represents a branched or cyclic saturated monovalent hydrocarbon group having 3 to 10 carbon atoms in which a carbon atom bonded to a nitrogen atom is branched and which may be separated by a heteroatom, R¹² represents a substituted or unsubstituted monovalent hydrocarbon group having 1 to 10 carbon atoms which may be separated by a heteroatom, provided that a branched or cyclic saturated monovalent hydrocarbon group having 3 to 10 carbon atoms in which a carbon atom bonded to a nitrogen atom is branched is excluded, or a branched or cyclic saturated monovalent hydrocarbon group having 3 to 10 carbon atoms in which a carbon atom bonded to a nitrogen atom is branched and which may be separated by a heteroatom, and R¹¹ and R¹² may be bonded to each other to form a ring together with a nitrogen atom to which they are bonded, being used as a base,
2. the method for producing a nitrogen-containing polyfunctional organoxysilane compound according to 1, wherein a combination of R¹¹ and R¹² in the general formula (5) is any one of a combination of secondary alkyl groups having 3 to 10 carbon atoms, a combination of cycloalkyl groups having 3 to 10 carbon atoms, a combination of a secondary alkyl group having 3 to 10 carbon atoms and a primary alkyl group having 1 to 10 carbon atoms, a combination of a cycloalkyl group having 3 to 10 carbon atoms and a primary alkyl group having 1 to 10 carbon atoms, a combination of a tertiary alkyl group having 4 to 10 carbon atoms and a primary alkyl group having 1 to 10 carbon atoms, or a combination of tertiary alkyl groups having 4 to 10 carbon atoms, and
3. the method for producing a nitrogen-containing polyfunctional organoxysilane compound according to 1 or 2, wherein the secondary amine compound having the general formula (5) is any one of the followings:

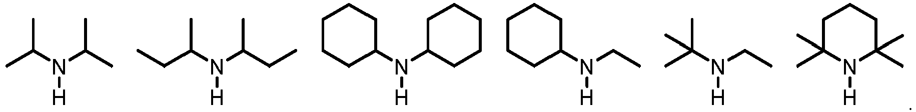

### ADVANTAGEOUS EFFECTS

According to the present invention, by using a bulky secondary amine as a base in a substitution reaction between a primary amine compound and a haloalkylalkoxysilane compound, a corresponding nitrogen-containing polyfunctional organoxysilane compound can be produced in high yield and high purity under mild reaction conditions.

### FURTHER EXPLANATIONS; OPTIONS AND PREFERENCES

Hereinafter, the present invention is specifically described.

The method of the present invention for producing a nitrogen-containing polyfunctional organoxysilane compound is a method for producing a nitrogen-containing polyfunctional organoxysilane compound using a secondary amine compound having the following general formula (5) (referred to as a compound (5) hereinafter) as a base in production of a nitrogen-containing polyfunctional organoxysilane compound having the following general formula (3) or (3') (referred to as a compound (3) or a compound (3') hereinafter) by a substitution reaction between an amine compound having the following general formula (1) or (1') (referred to as a compound (1) or a compound (1') hereinafter) and a haloalkylalkoxysilane compound having the following general formula (2) (referred to as a compound (2) hereinafter).

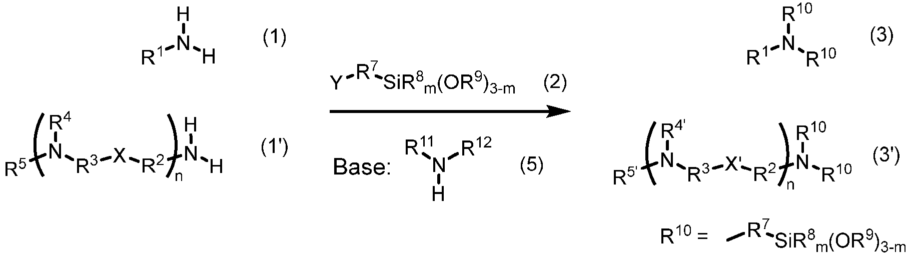

**In** the general formulae (1) and (3), R¹ represents a monovalent hydrocarbon group having 1 to 18 carbon atoms, preferably 1 to 10 carbon atoms, more preferably 3 to 10 carbon atoms, and still more preferably 3 to 8 carbon atoms which is unsubstituted or substituted with a group other than an amino group.

The monovalent hydrocarbon group of R¹ may be linear, branched, or cyclic, and specific examples thereof include linear alkyl groups such as methyl, ethyl, n-propyl, n-butyl, n-pentyl, n-hexyl, n-heptyl, n-octyl, n-nonyl, n-decyl, n-dodecyl, n-hexadecyl, and n-octadecyl groups; branched alkyl groups such as isopropyl, isobutyl, sec-butyl, tert-butyl, isopentyl, neopentyl, isohexyl, isoheptyl, isooctyl, and tert-octyl groups; cyclic alkyl groups such as cyclopentyl and cyclohexyl groups; alkenyl groups such as allyl, butenyl, and methallyl (i.e., 2-methyl-2-propenyl) groups; aryl groups such as phenyl, tolyl, and xylyl groups; and aralkyl groups such as benzyl and phenethyl groups.

Among them, R¹ is preferably a linear alkyl group, an alkenyl group, an aryl group, or an aralkyl group having 3 to 10 carbon atoms which is unsubstituted or substituted with a group other than an amino group, and in particular, from the viewpoints of availability of raw materials and high reactivity, more preferably a linear alkyl group having 3 to 8 carbon atoms, and still more preferably an n-propyl group, an n-butyl group, an n-hexyl group, or an n-octyl group.

Some or all of the hydrogen atoms of these monovalent hydrocarbon groups may be substituted with a substituent other than an amino group, examples of the substituent include alkoxy groups having 1 to 3 carbon atoms such as methoxy, ethoxy, and propoxy groups; halogen atoms such as fluorine, chlorine, and bromine; aryl groups having 6 to 10 carbon atoms such as phenyl and tolyl groups; aralkyl groups having 7 to 10 carbon atoms such as benzyl and phenethyl groups; a cyano group, an ester group, an ether group, a carbonyl group, an acyl group, a sulfide group, and alkoxysilyl groups such as a trialkoxysilyl group, and of these substituents, one can be used or two or more can be used in combination. Substitution positions of these substituents are not particularly limited, and the number of substituents is also not limited. As described later, the substituent is preferably an alkoxysilyl group.

Specific examples of the compound (1) include linear alkylamines such as methylamine, ethylamine, n-propylamine, n-butylamine, n-pentylamine, n-hexylamine, n-heptylamine, n-octylamine, n-nonylamine, n-decylamine, n-undecylamine, n-dodecylamine, n-hexadecylamine, and n-octadecylamine; branched alkylamines such as isopropylamine, isobutylamine, sec-butylamine, tert-butylamine, isopentylamine, neopentylamine, isohexylamine, isoheptylamine, isooctylamine, 2-ethylhexylamine, and tert-octylamine; cyclic alkylamines such as cyclopentylamine and cyclohexylamine; alkenylamines such as allylamine, butenylamine, methallylamine, hexenylamine, and octenylamine; arylamines such as aniline and toluidine; aralkylamines such as benzylamine and phenethylamine; and alkoxysilyl group-containing alkylamines such as 3-(trimethoxysilyl)propylamine, 3-(dimethoxymethylsilyl)propylamine, 3-(methoxydimethylsilyl)propylamine, 3-(triethoxysilyl)propylamine, 3-(diethoxymethylsilyl)propylamine, and 3-(ethoxydimethylsilyl)propylamine.

Among them, from the viewpoints of availability of raw materials and high reactivity, linear alkylamines and alkoxysilyl group-containing alkylamines are preferable, and n-propylamine, n-butylamine, n-hexylamine, n-octylamine, 3-(trimethoxysilyl)propylamine, and 3-(triethoxysilyl)propylamine are more preferable.

A commercially available amine compound may be used as the amine compound having the general formula (1), or the amine compound may be produced. **In** the case of producing the compound, the compound can be produced according to a conventionally known method, and can be obtained, for example, by a method in which a dehydration reaction between alcohol and ammonia is performed.

**In** the general formulae (1') and (3'), R² and R³ each represent a substituted or unsubstituted divalent hydrocarbon group having 1 to 3 carbon atoms, preferably 1 to 2 carbon atoms, and more preferably 1 carbon atom.

The divalent hydrocarbon group of R² and R³ may be linear or branched, and specific examples thereof include methylene, ethylene, trimethylene, and propylene groups.

Among them, R² and R³ each are preferably an unsubstituted linear alkylene group having 1 to 2 carbon atoms, and in particular, from the viewpoint of availability of raw materials, more preferably a methylene group or an ethylene group, and still more preferably a methylene group.

In the general formula (1'), R⁴ and R⁵ each represent a hydrogen atom or a substituted or unsubstituted monovalent hydrocarbon group having 1 to 18 carbon atoms, preferably 1 to 10 carbon atoms, and more preferably 1 to 5 carbon atoms.

When R⁴ and R⁵ are each a substituted or unsubstituted monovalent hydrocarbon group having 1 to 18 carbon atoms, the monovalent hydrocarbon group may be linear, branched, or cyclic, and specific examples thereof include the same monovalent hydrocarbon groups as exemplified above for R¹.

Among them, R⁴ and R⁵ each are preferably a substituted or unsubstituted linear alkyl group, alkenyl group, aryl group, or aralkyl group having 1 to 10 carbon atoms, and in particular, from the viewpoint of availability of raw materials, more preferably an alkyl group having 1 to 4 carbon atoms, and still more preferably a methyl group, an ethyl group, an n-propyl group, or an n-butyl group.

Some or all of the hydrogen atoms of these monovalent hydrocarbon groups may be substituted with other substituents, examples of the substituents include the same substituents as those of the substituted monovalent hydrocarbon group exemplified above for R¹, and of these substituents, one can be used or two or more can be used in combination. Substitution positions of these substituents are not particularly limited, and the number of substituents is also not limited.

In the general formula (1'), X represents a single bond or NR⁶, R⁶ represents a hydrogen atom or a substituted or unsubstituted monovalent hydrocarbon group having 1 to 18 carbon atoms, and R⁶ may be bonded to R⁵ to form a ring together with nitrogen atoms to which they are bonded.

When R⁶ is a substituted or unsubstituted monovalent hydrocarbon group having 1 to 18 carbon atoms, the monovalent hydrocarbon group may be linear, branched, or cyclic, and specific examples thereof include the same monovalent hydrocarbon groups as exemplified above for R¹.

Among them, R⁶ is preferably a substituted or unsubstituted linear alkyl group, alkenyl group, aryl group, or aralkyl group having 1 to 10 carbon atoms, and in particular, from the viewpoint of availability of raw materials, more preferably an alkyl group having 1 to 4 carbon atoms, and still more preferably a methyl group, an ethyl group, an n-propyl group, or an n-butyl group.

Some or all of the hydrogen atoms of these monovalent hydrocarbon groups may be substituted with other substituents, and examples of the substituents include the same substituents as those of the substituted monovalent hydrocarbon group exemplified above for R¹.

Examples of the ring structure formed by bonding R⁵ and R⁶ together with nitrogen atoms to which they are bonded include a piperazine ring.

In the general formula (1'), n represents an integer of 1 to 3, preferably an integer of 1 to 2.

Specific examples of the compound (1') include ethylenediamine compounds such as ethylenediamine, N-methylethylenediamine, N,N-dimethylethylenediamine, N-ethylethylenediamine, N,N-diethylethylenediamine, N-propylethylenediamine, N,N-dipropylethylenediamine, N-butylethylenediamine, and N,N-dibutylethylenediamine; propylenediamine compounds such as propylenediamine, N-methylpropylenediamine, N,N-dimethylpropylenediamine, N-ethylpropylenediamine, N,N-diethylpropylenediamine, N-propylpropylenediamine, N,N-dipropylpropylenediamine, N-butylpropylenediamine, and N,N-dibutylpropylenediamine; butylenediamine compounds such as butylenediamine, N-methylbutylenediamine, N,N-dimethylbutylenediamine, N-ethylbutylenediamine, N,N-diethylbutylenediamine, N-propylbutylenediamine, N,N-dipropylbutylenediamine, N-butylbutylenediamine, and N,N-dibutybutylenediamine; diethylenetriamine compounds such as diethylenetriamine, 2,2'-diamino-N-methyldiethylamine, 2,2'-diamino-N-ethyldiethylamine, 2,2'-diamino-N-propyldiethylamine, and 2,2'-diamino-N-butyldiethylamine; piperazine compounds such as N-(2-aminoethyl)piperazine and 1,4-bis(3-aminopropyl)piperazine; triethylenetetramine; and 1,6-diaminohexane.

Among them, from the viewpoint of availability of raw materials, ethylenediamine compounds, propylenediamine compounds, butylenediamine compounds, and piperazine compounds are preferable, and ethylenediamine, N-methylethylenediamine, N-ethylethylenediamine, propylenediamine, butylenediamine, and N-(2-aminoethyl)piperazine are more preferable.

A commercially available compound may be used as the compound (1'), or the compound may be produced. In the case of producing the compound, the compound can be produced according to a conventionally known method, and can be obtained, for example, by a method in which an addition reaction between an amine compound and an aziridine compound is performed.

In the general formula (2), R⁷ represents an unsubstituted divalent hydrocarbon group having 1 to 10 carbon atoms, preferably 1 to 8 carbon atoms, more preferably 1 to 5 carbon atoms, and still more preferably 1 to 3 carbon atoms which may be separated by a heteroatom.

The divalent hydrocarbon group of R⁷ may be linear, branched, or cyclic, and specific examples thereof include alkylene groups such as methylene, ethylene, trimethylene, tetramethylene, isobutylene, hexamethylene, octamethylene, decamethylene, cyclohexylene, and methylenecyclohexylene groups; alkenylene groups such as propenylene, butenylene, hexenylene, and octenylene groups; arylene groups such as a phenylene group; and aralkylene groups such as methylenephenylene and methylenephenylenemethylene groups.

Among them, R⁷ is preferably an unsubstituted linear alkylene group having 1 to 8 carbon atoms, and in particular, from the viewpoint of availability of raw materials, more preferably a methylene group, a trimethylene group, or an octamethylene group.

In these divalent hydrocarbon groups, the molecular chain may be separated by one or two or more heteroatoms, such as an ether group, a carbonyl group, an amino group, and a sulfide group.

In the general formula (2), R⁸ and R⁹ each independently represent a substituted or unsubstituted monovalent hydrocarbon group having 1 to 10 carbon atoms, preferably 1 to 5 carbon atoms, and more preferably 1 to 3 carbon atoms.

The monovalent hydrocarbon group of R⁸ and R⁹ may be linear, branched, or cyclic, and specific examples thereof include linear alkyl groups such as methyl, ethyl, n-propyl, n-butyl, n-pentyl, n-hexyl, n-heptyl, n-octyl, n-nonyl, and n-decyl groups; branched alkyl groups such as isopropyl, isobutyl, sec-butyl, tert-butyl, isopentyl, neopentyl, isohexyl, isoheptyl, isooctyl, and tert-octyl groups; cyclic alkyl groups such as cyclopentyl and cyclohexyl groups; alkenyl groups such as vinyl, allyl, 1-propenyl, butenyl, and methallyl (i.e., 2-methyl-2-propenyl) groups; aryl groups such as phenyl, tolyl, and xylyl groups; and aralkyl groups such as benzyl and phenethyl groups.

Among them, R⁸ and R⁹ each are preferably a substituted or unsubstituted linear, branched or cyclic alkyl group or alkenyl group having 1 to 5 carbon atoms, or aryl group or aralkyl group, and in particular, from the viewpoint of availability of raw materials, more preferably an unsubstituted linear alkyl group having 1 to 3 carbon atoms, and still more preferably a methyl group or an ethyl group.

Some or all of the hydrogen atoms of these monovalent hydrocarbon groups may be substituted with other substituents, examples of the substituents include alkoxy groups having 1 to 3 carbon atoms such as methoxy, ethoxy, and propoxy groups; halogen atoms such as fluorine, chlorine, and bromine; aryl groups having 6 to 10 carbon atoms such as phenyl and tolyl groups; aralkyl groups having 7 to 10 carbon atoms such as benzyl and phenethyl groups; a cyano group, an amino group, an ester group, an ether group, a carbonyl group, an acyl group, and a sulfide group, and of these substituents, one can be used or two or more can be used in combination. Substitution positions of these substituents are not particularly limited, and the number of substituents is also not limited.

In the general formula (2), Y represents a halogen atom such as fluorine, chlorine, bromine, or iodine, it is preferably chlorine, bromine, or iodine from the viewpoint of high reactivity, and particularly preferably chlorine from the viewpoint of availability of raw materials.

Specific examples of the compound (2) include (chloroalkyl)trialkoxysilanes such as (chloromethyl)trimethoxysilane, (3-chloropropyl)trimethoxysilane, (8-chlorooctyl)trimethoxysilane, (chloromethyl)triethoxysilane, (3-chloropropyl)triethoxysilane, and (8-chlorooctyl)triethoxysilane; (chloroalkyl)dialkoxyalkylsilanes such as (chloromethyl)dimethoxymethylsilane, (3-chloropropyl)dimethoxymethylsilane, (8-chlorooctyl)dimethoxymethylsilane, (chloromethyl)diethoxymethylsilane, (3-chloropropyl)diethoxymethylsilane, and (8-chlorooctyl)diethoxymethylsilane; and (chloroalkyl)alkoxydialkylsilanes such as (chloromethyl)methoxydimethylsilane, (3-chloropropyl)methoxydimethylsilane, (8-chlorooctyl)methoxydimethylsilane, (chloromethyl)ethoxydimethylsilane, (3-chloropropyl)ethoxydimethylsilane, and (8-chlorooctyl)ethoxydimethylsilane.

Among them, from the viewpoints of availability and a large number of functions, (chloroalkyl)trialkoxysilanes such as (chloromethyl)trialkoxysilanes and (3-chloropropyl)trialkoxysilanes are preferable, and (chloromethyl)trimethoxysilane, (chloromethyl)triethoxysilane, (3-chloropropyl)trimethoxysilane, and (3-chloropropyl)triethoxysilane are more preferable.

A commercially available compound may be used as the compound (2), or the compound may be produced. In the case of producing the compound, the compound can be produced according to a conventionally known method, and can be obtained, for example, by a method in which a hydrosilylation reaction between a halogenated alkenyl compound and a hydrosilane compound is performed.

In the substitution reaction, the amount of the compound (2) used is not particularly limited, but is preferably in the range of 0.9 to 2.0 mol, more preferably 1.0 to 1.1 mol per mol of N-H of the compound (1) or (1').

In the general formula (5), R¹¹ represents a branched or cyclic saturated monovalent hydrocarbon group having 3 to 10 carbon atoms, preferably 3 to 8 carbon atoms, and more preferably 3 to 6 carbon atoms in which a carbon atom bonded to a nitrogen atom is branched and which may be separated by a heteroatom.

**In** addition, R¹² represents a substituted or unsubstituted monovalent hydrocarbon group having 1 to 10 carbon atoms, preferably 1 to 8 carbon atoms, and more preferably 1 to 6 carbon atoms which may be separated by a heteroatom, provided that a branched or cyclic saturated monovalent hydrocarbon group having 3 to 10 carbon atoms in which a carbon atom bonded to a nitrogen atom is branched is excluded, or a branched or cyclic saturated monovalent hydrocarbon group having 3 to 10 carbon atoms, preferably 3 to 8 carbon atoms, and more preferably 3 to 6 carbon atoms in which a carbon atom bonded to a nitrogen atom is branched and which may be separated by a heteroatom.

The branched or cyclic saturated monovalent hydrocarbon group of R¹¹ and R¹² may be branched or cyclic, and specific examples thereof include branched alkyl groups such as isopropyl, sec-butyl, tert-butyl, and tert-amyl groups; and cyclic alkyl groups such as cyclopropyl, cyclopentyl, cyclohexyl, and adamantyl groups.

The monovalent hydrocarbon group of R¹² may be linear, branched, or cyclic, and specific examples thereof include linear alkyl groups such as methyl, ethyl, n-propyl, n-butyl, n-pentyl, n-hexyl, n-heptyl, n-octyl, n-nonyl, and n-decyl groups; branched alkyl groups such as isopropyl, isobutyl, sec-butyl, tert-butyl, isopentyl, neopentyl, isohexyl, isoheptyl, isooctyl, and tert-octyl groups; cyclic alkyl groups such as cyclopentyl and cyclohexyl groups; alkenyl groups such as allyl, butenyl, and methallyl (i.e., 2-methyl-2-propenyl) groups; and aralkyl groups such as benzyl and phenethyl groups.

Among them, R¹¹ is preferably a substituted or unsubstituted saturated alkyl group having 3 to 8 carbon atoms, and in particular, from the viewpoint of availability of raw materials, more preferably a saturated alkyl group having 3 to 6 carbon atoms, and still more preferably an isopropyl group, a tert-butyl group, or a cyclohexyl group.

Some or all of the hydrogen atoms of these monovalent hydrocarbon groups may be substituted with other substituents, examples of the substituents include alkoxy groups having 1 to 3 carbon atoms such as methoxy, ethoxy, and propoxy groups; halogen atoms such as fluorine, chlorine, and bromine; aryl groups having 6 to 10 carbon atoms such as phenyl and tolyl groups; aralkyl groups having 7 to 10 carbon atoms such as benzyl and phenethyl groups; a cyano group, an ester group, an ether group, a carbonyl group, an acyl group, and a sulfide group, and of these substituents, one can be used or two or more can be used in combination. Substitution positions of these substituents are not particularly limited, and the number of substituents is also not limited.

Among them, R¹² is preferably a substituted or unsubstituted alkyl group, alkenyl group, or aralkyl group having 1 to 8 carbon atoms, and in particular, from the viewpoints of availability of raw materials and high basicity, more preferably a linear or cyclic alkyl group having 1 to 6 carbon atoms, and still more preferably a methyl group, an ethyl group, an n-propyl group, an n-butyl group, an n-hexyl group, an isopropyl group, or a cyclohexyl group.

Some or all of the hydrogen atoms of these monovalent hydrocarbon groups may be substituted with other substituents, examples of the substituents include alkoxy groups having 1 to 3 carbon atoms such as methoxy, ethoxy, and propoxy groups; halogen atoms such as fluorine, chlorine, and bromine; aryl groups having 6 to 10 carbon atoms such as phenyl and tolyl groups; aralkyl groups having 7 to 10 carbon atoms such as benzyl and phenethyl groups; a cyano group, an ester group, an ether group, a carbonyl group, an acyl group, and a sulfide group, and of these substituents, one can be used or two or more can be used in combination. Substitution positions of these substituents are not particularly limited, and the number of substituents is also not limited.

R¹¹ and R¹² may be bonded to each other to form a ring together with a nitrogen atom to which they are bonded, for example, to form a piperidine ring.

The combination of R¹¹ and R¹² is preferably any one of a combination of secondary alkyl groups having 3 to 10 carbon atoms, a combination of cycloalkyl groups having 3 to 10 carbon atoms, a combination of a secondary alkyl group having 3 to 10 carbon atoms and a primary alkyl group having 1 to 10 carbon atoms, a combination of a cycloalkyl group having 3 to 10 carbon atoms and a primary alkyl group having 1 to 10 carbon atoms, a combination of a tertiary alkyl group having 4 to 10 carbon atoms and a primary alkyl group having 1 to 10 carbon atoms, or a combination of tertiary alkyl groups having 4 to 10 carbon atoms, and more preferably any one of a combination of secondary alkyl groups having 3 to 8 carbon atoms, a combination of cycloalkyl groups having 5 to 8 carbon atoms, a combination of a secondary alkyl group having 3 to 8 carbon atoms and a primary alkyl group having 1 to 8 carbon atoms, a combination of a cycloalkyl group having 3 to 10 carbon atoms and a primary alkyl group having 1 to 8 carbon atoms, a combination of a tertiary alkyl group having 4 to 8 carbon atoms and a primary alkyl group having 1 to 8 carbon atoms, or a combination of tertiary alkyl groups having 4 to 8 carbon atoms.

Specific examples of the compound (5) include N-alkyl or cycloalkylisopropylamines such as N-methylisopropylamine, N-ethylisopropylamine, N-propylisopropylamine, diisopropylamine, N-isopropylbutylamine, N-isopropylhexylamine, and N-isopropylcyclohexylamine; N-alkyl or cycloalkylcyclohexylamines such as N-methylcyclohexylamine, N-ethylcyclohexylamine, N-propylcyclohexylamine, N-isopropylcyclohexylamine, N-butylcyclohexylamine, N-hexylcyclohexylamine, dicyclohexylamine; alkyl-tert-butylamines such as N-methyl-tert-butylamine, N-ethyl-tert-butylamine, N-propyl-tert-butylamine, and N-tert-butylhexylamine; di-sec-butylamine, 2,2,6,6-tetramethylpiperidine, and N-methyladamantylamine.

Among them, from the viewpoint of availability, N-alkyl or cycloalkylisopropylamines, N-alkyl or cycloalkylcyclohexylamines, alkyl-tert-butylamines, di-sec-butylamine, and 2,2,6,6-tetramethylpiperidine are preferable, and from the viewpoint of less side reaction, N-alkyl or cycloalkylisopropylamines, N-alkyl or cycloalkylcyclohexylamines are more preferable, and diisopropylamine and dicyclohexylamine are still more preferable.

A commercially available compound may be used as the compound (5), or the compound may be produced. In the case of producing the compound, the compound can be produced according to a conventionally known method, and can be obtained, for example, by a method in which a reductive amination reaction between an amine and a carbonyl compound is performed.

In the substitution reaction, the amount of the compound (5) used is not particularly limited, but is preferably in the range of 0.9 to 2.0 mol, more preferably 1.0 to 1.1 mol per mol of N-H of the compound (1) or (1').

The substitution reaction can be performed in the presence or absence of an organic solvent.

Specific examples of usable organic solvents include hydrocarbon solvents such as benzene, toluene, and xylene; ether solvents such as diethyl ether, tetrahydrofuran, 2-methyltetrahydrofuran, 4-methyltetrahydropyran, and dioxane; ester solvents such as ethyl acetate and butyl acetate; aprotic polar solvents such as acetonitrile, N,N-dimethylformamide, and N-methylpyrrolidone; and alcohol solvents such as methanol and ethanol. These solvents may be used singly, or in combination of two or more thereof.

When a solvent is used, the amount thereof is not particularly limited, but is preferably in the range of 0.05 to 10.0 liters, more preferably 0.08 to 0.2 liters per mol of N-H of the compound (1) or (1').

The pressure during the reaction is not limited, but it is preferable to perform the reaction at normal pressure.

The reaction temperature is not particularly limited, but is preferably 20 to 200°C, more preferably 50 to 130°C, and the reaction time is not particularly limited, but is preferably 1 to 40 hours, more preferably 1 to 24 hours.

The reaction is preferably performed under an inert gas atmosphere such as nitrogen or argon.

In the substitution reaction, a catalyst may be used for the purpose of shortening the reaction time. The catalyst is preferably a quaternary onium salt, and specific examples thereof include tetrabutylammonium bromide, tetrabutylammonium iodide, tetrabutylphosphonium bromide, and tributylmethylphosphonium iodide.

In the substitution reaction, the produced hydrohalide of the compound (5) can be removed by filtration after completion of the reaction. The hydrohalide of compound (5) can also be regenerated by adding an amine compound having stronger basicity such as 1,8-diazabicyclo[5.4.0]-7-undecene after completion of the reaction.

In the general formulae (3) and (3'), R¹⁰ represents an alkoxysilylalkyl group having the following general formula (4), and specific examples thereof include an alkoxysilylalkyl group corresponding to the compound (2) as a raw material.

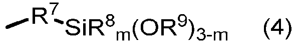

In the formula, R⁷ to R⁹ and m are as defined above.

In the above general formula (3'), R^{4'} and R^{5'} each represent R¹⁰ above when R⁴ and R⁵ each in the compound (1') are a hydrogen atom, and R^{4'} and R^{5'} each represent a substituted or unsubstituted monovalent hydrocarbon group having 1 to 18 carbon atoms when R⁴ and R⁵ each in the compound (1') are a substituted or unsubstituted monovalent hydrocarbon group having 1 to 18 carbon atoms.

In the general formula (3'), X' represents a single bond or NR^{6'}, and when R⁶ in the compound (1') is a hydrogen atom, R^{6'} represents R¹⁰ above, and when R⁶ in the compound (1') is a substituted or unsubstituted monovalent hydrocarbon group having 1 to 18 carbon atoms, R^{6'} represents a substituted or unsubstituted monovalent hydrocarbon group having 1 to 18 carbon atoms.

The nitrogen-containing polyfunctional organoxysilane compound having the general formulae (3) and (3') obtained by the production method of the present invention can also be further purified by various purification methods such as distillation, filtration, washing, and column separation depending on the intended quality, and then used. For high purity, purification by distillation is particularly preferred.

### EXAMPLES

Hereinafter, the present invention is specifically described with reference to Examples and Comparative Examples, but the present invention is not limited to the following Examples.

The conversion rate was analyzed by gas chromatography and calculated from the area ratio % of the amine compound as a raw material, the secondary amine compound as an intermediate, and the nitrogen-containing polyfunctional organoxysilane compound as a target product.

The purity of the polyfunctional organoxysilane compound is a value measured by gas chromatography under the following measurement conditions.

### [Measurement Conditions of Gas Chromatography]

| | |
|---|---|
| Gas chromatograph: | GC-2014 (manufactured by Shimadzu Corporation) |
| Packed column: | Silicone SE-30 (manufactured by GL Sciences Inc.) |
| Detector: | TCD |
| Detector temperature: | 300°C |
| Inlet temperature: | 300°C |
| Temperature ramp program: | 70°C (0 min) → 10°C/min → 300°C (10 min) |
| Carrier gas: | helium (50 ml/min) |
| Injection volume: | 1 µl |

### Example 1

The inside of a four-necked flask equipped with a stirrer, a reflux condenser, a dropping funnel, and a thermometer was purged with nitrogen, and 50.6 g (500 mmol) of hexylamine, 181.0 g (1000 mmol) of dicyclohexylamine, 1.7 g (5 mmol) of tributylmethylphosphonium iodide, and 15.0 g of acetonitrile were charged into the flask and stirred while nitrogen gas was flowed into an open end of an upper part of the reflux condenser to prevent mixing with outside air. Then, 198.7 g (1000 mmol) of (3-chloropropyl)trimethoxysilane was added dropwise over 1 hour while the temperature was adjusted such that the internal temperature was 120°C, and then the mixture was stirred at 120 to 130°C for 9 hours under normal pressure.

A small amount of the reaction mixture was sampled, and the conversion rate was calculated by gas chromatography, finding that the conversion rate from hexylamine to N,N-bis[3-(trimethoxysilyl)propyl]-1-hexanamine was 95.1%. The reaction mixture was cooled to 80°C, 80.0 g of acetonitrile and 147.4 g (970 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 414.0 g of a crude product. After 1.0 g of a 28 wt% sodium methoxide methanol solution was added to the crude product, the mixture was distilled at 80 Pa, obtaining N,N-bis[3-(trimethoxysilyl)propyl]-1-hexanamine in 85.5% yield and 99.2% purity.

### Example 2

The inside of a four-necked flask equipped with a stirrer, a reflux condenser, a dropping funnel, and a thermometer was purged with nitrogen, and 50.6 g (500 mmol) of hexylamine, 101.2 g (1000 mmol) of diisopropylamine, 1.7 g (5 mmol) of tributylmethylphosphonium iodide, and 15.0 g of acetonitrile were charged into the flask and stirred while nitrogen gas was flowed into an open end of an upper part of the reflux condenser to prevent mixing with outside air. Then, 198.7 g (1000 mmol) of (3-chloropropyl)trimethoxysilane was added dropwise over 1 hour while the temperature was adjusted such that the internal temperature was 120°C, and then the mixture was stirred at 120 to 130°C for 9 hours under normal pressure.

A small amount of the reaction mixture was sampled, and the conversion rate was calculated by gas chromatography, finding that the conversion rate from hexylamine to N,N-bis[3-(trimethoxysilyl)propyl]-1-hexanamine was 86.5%. The reaction mixture was cooled to 80°C, 80.0 g of acetonitrile and 147.4 g (970 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 345.5 g of a crude product. After 1.1 g of a 28 wt% sodium methoxide methanol solution was added to the crude product, the mixture was distilled at 80 Pa, obtaining N,N-bis[3-(trimethoxysilyl)propyl]-1-hexanamine in 76.3% yield and 98.5% purity.

### Example 3

The inside of a four-necked flask equipped with a stirrer, a reflux condenser, a dropping funnel, and a thermometer was purged with nitrogen, and 5.1 g (50 mmol) of hexylamine, 14.1 g (100 mmol) of 2,2,6,6-tetramethylpiperidine, 0.2 g (0.5 mmol) of tributylmethylphosphonium iodide, and 1.5 g of acetonitrile were charged into the flask and stirred while nitrogen gas was flowed into an open end of an upper part of the reflux condenser to prevent mixing with outside air. Then, 19.9 g (100 mmol) of (3-chloropropyl)trimethoxysilane was added dropwise over 1 hour while the temperature was adjusted such that the internal temperature was 120°C, and then the mixture was stirred at 120 to 130°C for 9 hours under normal pressure.

A small amount of the reaction mixture was sampled, and the conversion rate was calculated by gas chromatography, finding that the conversion rate from hexylamine to N,N-bis[3-(trimethoxysilyl)propyl]-1-hexanamine was 87.1%. The reaction mixture was cooled to 80°C, 8.0 g of acetonitrile and 14.7 g (97 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 38.5 g of a crude product. After 0.1 g of a 28 wt% sodium methoxide methanol solution was added to the crude product, the mixture was distilled at 80 Pa, obtaining N,N-bis[3-(trimethoxysilyl)propyl]-1-hexanamine in 75.1% yield and 98.1% purity.

### Example 4

The inside of a four-necked flask equipped with a stirrer, a reflux condenser, a dropping funnel, and a thermometer was purged with nitrogen, and 89.5 g (500 mmol) of (3-aminopropyl)trimethoxysilane, 181.0 g (1000 mmol) of dicyclohexylamine, 3.4 g (10 mmol) of tetrabutylphosphonium bromide, and 15.0 g of acetonitrile were charged into the flask and stirred while nitrogen gas was flowed into an open end of an upper part of the reflux condenser to prevent mixing with outside air. Then, 182.1 g (1000 mmol) of (3-chloropropyl)methyldimethoxysilane was added dropwise over 1 hour while the temperature was adjusted such that the internal temperature was 120°C, and then the mixture was stirred at 120 to 130°C for 24 hours under normal pressure.

A small amount of the reaction mixture was sampled, and the conversion rate was calculated by gas chromatography, finding that the conversion rate from (3-aminopropyl)trimethoxysilane to 3-(trimethoxysilyl)-N,N-bis[3-(methyldimethoxysilyl)propyl]-1-propanamine was 94.1%. The reaction mixture was cooled to 80°C, 80.0 g of acetonitrile and 147.4 g (970 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 434.5 g of a crude product. After 0.9 g of a 28 wt% sodium methoxide methanol solution was added to the crude product, the mixture was distilled at 80 Pa, obtaining 3-(trimethoxysilyl)-N,N-bis[3-(methyldimethoxysilyl)propyl]-1-propanamine in 78.4% yield and 99.4% purity.

### Example 5

The inside of a four-necked flask equipped with a stirrer, a reflux condenser, a dropping funnel, and a thermometer was purged with nitrogen, and 22.0 g (250 mmol) of N-ethylethylenediamine, 136.0 g (750 mmol) of dicyclohexylamine, 2.6 g (7.5 mmol) of tributylmethylphosphonium iodide, and 25.0 g of acetonitrile were charged into the flask and stirred while nitrogen gas was flowed into an open end of an upper part of the reflux condenser to prevent mixing with outside air. Then, 149.1 g (750 mmol) of (3-chloropropyl)trimethoxysilane was added dropwise over 30 minutes while the temperature was adjusted such that the internal temperature was 115°C, and then the mixture was stirred at 115 to 130°C for 9 hours under normal pressure.

A small amount of the reaction mixture was sampled, and the conversion rate was calculated by gas chromatography, finding that the conversion rate from N-ethylethylenediamine to N-ethyl-N,N',N'-tris[3-(trimethoxysilyl)propyl]ethylenediamine was 95.0%. The reaction mixture was cooled to 80°C, 10.0 g of acetonitrile and 114.3 g (750 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 288.4 g of a crude product. After 0.9 g of a 28 wt% sodium methoxide methanol solution was added to the crude product, the mixture was distilled at 200 Pa, obtaining N-ethyl-N,N',N'-tris[3-(trimethoxysilyl)propyl]ethylenediamine in 81.1% yield and 98.1% purity.

### Example 6

The inside of a four-necked flask equipped with a stirrer, a reflux condenser, a dropping funnel, and a thermometer was purged with nitrogen, and 32.3 g (250 mmol) of N-(2-aminoethyl)piperazine, 136.0 g (750 mmol) of dicyclohexylamine, 2.6 g (7.5 mmol) of tributylmethylphosphonium iodide, and 25.0 g of acetonitrile were charged into the flask and stirred while nitrogen gas was flowed into an open end of an upper part of the reflux condenser to prevent mixing with outside air. Then, 164.0 g (825 mmol) of (3-chloropropyl)trimethoxysilane was added dropwise over 30 minutes while the temperature was adjusted such that the internal temperature was 115°C, and then the mixture was stirred at 115 to 130°C for 16 hours under normal pressure.

A small amount of the reaction mixture was sampled, and the conversion rate was calculated by gas chromatography, finding that the conversion rate from N-(2-aminoethyl)piperazine to N,N,4-tris[3-(trimethoxysilyl)propyl]-1-piperazineethanamine was 96.9%. The reaction mixture was cooled to 80°C, 45.0 g of acetonitrile and 114.3 g (750 mmol) of 1,8-diazabicyclo[5.4.0]-7-undecene were added dropwise, and then the mixture was stirred at 80°C for 30 minutes.

The lower layer of the reaction solution separated into two layers was removed by separatory operation, obtaining 306.5 g of a crude product. After 2.4 g of a 28 wt% sodium methoxide methanol solution was added to the crude product, low-boiling components were distilled off at 200 Pa, obtaining N,N,4-tris[3-(trimethoxysilyl)propyl]-1-piperazineethanamine in 90.7% yield and 94.2% purity. This was further purified by distilling at 30 Pa, obtaining N,N,4-tris[3-(trimethoxysilyl)propyl]-1-piperazineethanamine in 66.9% yield and 99.2% purity.

### Comparative Example 1

The inside of a four-necked flask equipped with a stirrer, a reflux condenser, a dropping funnel, and a thermometer was purged with nitrogen, and 50.6 g (500 mmol) of hexylamine, 129.3 g (1000 mmol) of N,N-diisopropylethylamine, 1.7 g (5 mmol) of tributylmethylphosphonium iodide, and 15.0 g of acetonitrile were charged into the flask and stirred while nitrogen gas was flowed into an open end of an upper part of the reflux condenser to prevent mixing with outside air. Then, 198.7 g (1000 mmol) of (3-chloropropyl)trimethoxysilane was added dropwise over 1 hour while the temperature was adjusted such that the internal temperature was 120°C, and then the mixture was stirred at 120 to 130°C for 9 hours under normal pressure.

The reaction mixture was cooled to 80°C, 80.0 g of acetonitrile and 147.4 g (970 mmol) of 1,8-diazabicyclo[5.4.0]-7-undecene were added dropwise, and then the mixture was stirred at 80°C for 30 minutes.

A small amount of the reaction mixture was sampled and analyzed by gas chromatography, finding that the conversion rate from hexylamine to the target compound N,N-bis[3-(trimethoxysilyl)propyl]-1-hexanamine was 11.3%. The conversion rate from hexylamine to N-[3-(trimethoxysilyl)propyl]-1-hexanamine as an intermediate secondary amine compound was 77.2%. It was confirmed that a large amount of unreacted (3-chloropropyl)trimethoxysilane remained.

Since the amount of target N,N-bis[3-(trimethoxysilyl)propyl]-1-hexanamine produced was small, purification by distilling was not performed.

### Comparative Example 2

The inside of a four-necked flask equipped with a stirrer, a reflux condenser, a dropping funnel, and a thermometer was purged with nitrogen, and 50.6 g (500 mmol) of hexylamine, 152.2 g (1000 mmol) of 1,8-diazabicyclo[5.4.0]-7-undecene, 1.7 g (5 mmol) of tributylmethylphosphonium iodide, and 15.0 g of acetonitrile were charged into the flask and stirred while nitrogen gas was flowed into an open end of an upper part of the reflux condenser to prevent mixing with outside air. Then, 198.7 g (1000 mmol) of (3-chloropropyl)trimethoxysilane was added dropwise over 1 hour while the temperature was adjusted such that the internal temperature was 120°C, and then the mixture was stirred at 120 to 130°C for 9 hours under normal pressure.

A small amount of the reaction mixture was sampled and analyzed by gas chromatography, finding that the conversion rate from hexylamine to the target compound N,N-bis[3-(trimethoxysilyl)propyl]-1-hexanamine was 28.0%. The conversion rate from hexylamine to N-[3-(trimethoxysilyl)propyl]-1-hexanamine as an intermediate secondary amine compound was 72.0%. It was confirmed that (3-chloropropyl)trimethoxysilane was consumed completely.

The reaction mixture was cooled to 80°C, 80.0 g of acetonitrile was added dropwise, and then the mixture was stirred at 80°C for 30 minutes. The lower layer of the reaction solution separated into two layers was removed by separatory operation, obtaining 125.5 g of a crude product. After 0.3 g of a 28 wt% sodium methoxide methanol solution was added to the crude product, the mixture was distilled at 80 Pa, obtaining N,N-bis[3-(trimethoxysilyl)propyl]-1-hexanamine in 13.2% yield and 98.9% purity.

As described above, in Examples 1 to 6, it is found that by using a secondary amine compound having a specific structure according to the present invention as a base, a corresponding nitrogen-containing polyfunctional organoxysilane compound is, in each case, produced at a high conversion rate and obtained in high yield and high purity, even though the reaction is performed under mild conditions such as normal pressure and 130°C or lower.

On the other hand, in Comparative Example 1, hexylamine and (3-chloropropyl)trimethoxysilane as in Examples 1 to 3 were reacted under the same conditions as in Examples 1 to 3 using diisopropylethylamine, which is a tertiary amine compound, as a base, but N,N-bis[3-(trimethoxysilyl)propyl]-1-hexanamine as a target compound was produced only at a low conversion rate. Instead, N-[3-(trimethoxysilyl)propyl]-1-hexanamine as an intermediate secondary amine compound was obtained as a principal component, and it was confirmed that a large amount of (3-chloropropyl)trimethoxysilane remained. Thus, it is considered that the intermediate secondary amine compound having stronger basicity than diisopropylethylamine captured hydrogen chloride as a by-product and formed a hydrohalide having poor reactivity, whereby the reaction rate was significantly reduced.

In Comparative Example 2, hexylamine and (3-chloropropyl)trimethoxysilane were reacted under the same conditions as in Examples 1 to 3 using 1,8-diazabicyclo[5.4.0]-7-undecene, which is a strongly basic amidine compound, as a base, but it is found that N,N-bis[3-(trimethoxysilyl)propyl]-1-hexanamine as a target product is produced only at a low conversion rate, and accordingly, the isolation yield is also remarkably low. Since (3-chloropropyl)trimethoxysilane was completely consumed, it is considered that 1,8-diazabicyclo[5.4.0]-7-undecene reacted with (3-chloropropyl)trimethoxysilane in preference to N-[3-(trimethoxysilyl)propyl]-1-hexanamine as an intermediate secondary amine compound, and thus the yield of target N,N-bis[3-(trimethoxysilyl)propyl]-1-hexanamine was reduced.

## Claims

1. A method for producing a nitrogen-containing polyfunctional organoxysilane compound, the method comprising the step of performing a substitution reaction between an amine compound having the following general formula (1) or (1'): 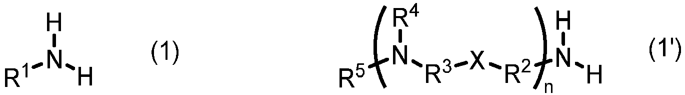
wherein R¹ represents a monovalent hydrocarbon group having 1 to 18 carbon atoms which is unsubstituted or substituted with a group other than an amino group, R² and R³ each represent a substituted or unsubstituted divalent hydrocarbon group having 1 to 3 carbon atoms, R⁴ and R⁵ each represent a hydrogen atom or a substituted or unsubstituted monovalent hydrocarbon group having 1 to 18 carbon atoms, X represents a single bond or NR⁶, R⁶ represents a hydrogen atom or a substituted or unsubstituted monovalent hydrocarbon group having 1 to 18 carbon atoms, R⁵ and R⁶ may be bonded to each other to form a ring together with nitrogen atoms to which they are bonded, and n represents an integer of 1 to 3, and a haloalkylalkoxysilane compound having the following general formula (2): 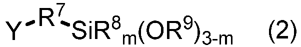
wherein R⁷ represents an unsubstituted divalent hydrocarbon group having 1 to 10 carbon atoms which may be separated by a heteroatom, R⁸ and R⁹ each independently represent a substituted or unsubstituted monovalent hydrocarbon group having 1 to 10 carbon atoms, Y represents a chlorine atom, a bromine atom, or an iodine atom, and m represents an integer of 0 to 2, to produce a nitrogen-containing polyfunctional organoxysilane compound having the following general formula (3) or (3'): 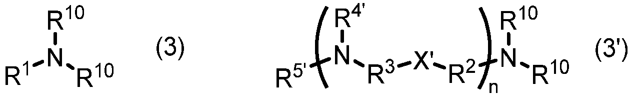
wherein R¹ to R³ and n are as defined above, and R¹⁰ represents an alkoxysilylalkyl group having the following general formula (4): 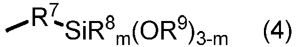
wherein, R⁷ to R⁹ and m are as defined above, R^{4'} and R^{5'} each represent R¹⁰ or a substituted or unsubstituted monovalent hydrocarbon group having 1 to 18 carbon atoms, X' represents a single bond or NR^{6'}, and R^{6'} represents R¹⁰ or a substituted or unsubstituted monovalent hydrocarbon group having 1 to 18 carbon atoms,
a secondary amine compound having the following general formula (5): 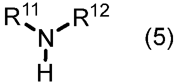
wherein R¹¹ represents a branched or cyclic saturated monovalent hydrocarbon group having 3 to 10 carbon atoms in which a carbon atom bonded to a nitrogen atom is branched and which may be separated by a heteroatom, R¹² represents a substituted or unsubstituted monovalent hydrocarbon group having 1 to 10 carbon atoms which may be separated by a heteroatom, provided that a branched or cyclic saturated monovalent hydrocarbon group having 3 to 10 carbon atoms in which a carbon atom bonded to a nitrogen atom is branched is excluded, or a branched or cyclic saturated monovalent hydrocarbon group having 3 to 10 carbon atoms in which a carbon atom bonded to a nitrogen atom is branched and which may be separated by a heteroatom, and R¹¹ and R¹² may be bonded to each other to form a ring together with a nitrogen atom to which they are bonded, being used as a base.

2. The method for producing a nitrogen-containing polyfunctional organoxysilane compound according to claim 1, wherein a combination of R¹¹ and R¹² in the general formula (5) is any one of a combination of secondary alkyl groups having 3 to 10 carbon atoms, a combination of cycloalkyl groups having 3 to 10 carbon atoms, a combination of a secondary alkyl group having 3 to 10 carbon atoms and a primary alkyl group having 1 to 10 carbon atoms, a combination of a cycloalkyl group having 3 to 10 carbon atoms and a primary alkyl group having 1 to 10 carbon atoms, a combination of a tertiary alkyl group having 4 to 10 carbon atoms and a primary alkyl group having 1 to 10 carbon atoms, or a combination of tertiary alkyl groups having 4 to 10 carbon atoms.

3. The method for producing a nitrogen-containing polyfunctional organoxysilane compound according to claim 1 or 2, wherein the secondary amine compound having the general formula (5) is any one of the followings:
